# FASCICULE DE BREVET EUROPEEN

(11) **EP 1 578 085 B1**
(45) Date de publication et mention de la délivrance du brevet: **28.11.2007**
(21) Numéro de dépôt: 05290600.5
(22) Date de dépôt: 14.03.2005
(51) Int. Cl.: H04L 29/08, H04L 12/26

(54) **Procédé et dispositif de téléchargement de données numériques sur un terminal après mesure du débit en réception pour le terminal**
Verfahren und Vorrichtung zum Herunterladen von digitalen Daten auf ein Endgerät nach der Messung der Empfangsrate für das Endgerät
Process and apparatus for downloading digital data on a terminal after measuring the data reception rate for the terminal

(30) Priorité: 18.03.2004 FR 0402812
(43) Date de publication de la demande: 21.09.2005
(73) Titulaire: FRANCE TELECOM, 75015 Paris (FR)
(72) Inventeur: Bertin, Christian, 35000 Rennes (FR); Coloigner, Gilbert, 35830 Betton (FR)
(74) Mandataire: Ledey, Michel

(56) Documents cités:
- US-A1- 2002 029 274
- US-A1- 2002 071 388
- US-A1- 2002 161 913
- US-A1- 2003 018 447

## Description

La présente invention concerne de manière générale la mesure de débit disponible en réception pour un terminal client connecté à un réseau de communication et susceptible de télécharger des données numériques depuis un serveur de données.

L'intérêt d'une telle mesure est notamment de sélectionner un débit de codage le plus approprié au débit disponible en réception pour le terminal client avant de lui envoyer des données.

Il existe des logiciels de mesure à installer dans le terminal client. Un tel logiciel mesure de façon périodique la quantité de données qui transitent à un niveau de protocole donné sur l'accès au réseau vers un ou des équipements connectés au réseau. Ce logiciel est indépendant des équipements qui génèrent le trafic de données. Il n'est donc pas adapté pour mesurer le débit en réception pour un terminal. En effet, il fournit des résultats statistiques sur le réseau, destinés à un opérateur et non à un serveur de données.

D'autre part, il existe des logiciels de mesure installés coté serveur. Un tel logiciel mesure la quantité de données qui transitent à un niveau de protocole donné sur l'accès au réseau vers un terminal client.

Par exemple, les documents US 2002044528, US2002165970 et EP 0622967 ont trait à des mesures réalisées coté serveur.

La demande de brevet US 2002/0161913 divulgue une méthode pour télécharger des données dans un terminal client depuis un serveur distant, dans laquelle le terminal client mesure un débit de transfert de données avec le serveur distant préalablement au téléchargement, en utilisant les paquets échangées lors d'une connexion avec le serveur distant. L'application de mesure de débit de transfert de données correspondante est éventuellement téléchargée depuis Internet.

Ce type d'architecture présente les inconvénients suivants. La mesure de débit est effectuée par un serveur donné, pour les besoins spécifiques de ce serveur. Il faudra donc répéter la mesure pour chaque serveur. En outre, le serveur doit mettre en oeuvre un générateur de trafic couplé à une application d'absorption de trafic dans le terminal client.

D'autre part, on souhaite que la mesure de débit soit effectuée très rapidement.

La présente invention a pour but de résoudre les inconvénients de la technique antérieure en fournissant un procédé et un dispositif de téléchargement de données numériques pour un terminal client adapté à être connecté à un serveur de données par l'intermédiaire d'un réseau de communication, qui permettent une mesure de débit disponible en réception pour le terminal client qui n'est pas liée à un serveur spécifique tout en étant rapide à effectuer.

A cette fin, l'invention propose un procédé de téléchargement de données numériques selon la revendication 1.

Grâce à l'invention, la mesure du débit disponible en réception pour un terminal client est effectuée indépendamment de la réception des données numériques du serveur de données. La mesure n'est pas liée à un serveur spécifique.

Selon une caractéristique préférée, le fichier de test comporte des paquets de données, et l'étape de mesure d'un débit de téléchargement du fichier de test comporte
- la mesure d'un débit de téléchargement après la réception de chaque paquet,
- la vérification d'un test de stabilité des débits mesuré,
- l'arrêt du téléchargement du fichier de test et des mesures lorsque le test de stabilité est vérifié.

Ainsi, la mesure de débit est effectuée rapidement.

Selon une caractéristique préférée, la mesure d'un débit de téléchargement après la réception de chaque paquet est réalisée entre un paquet d'ordre prédéterminé dans le fichier de test et le dernier paquet reçu.

Les résultats de mesure tendent rapidement vers une valeur stable.

Plus précisément, la mesure d'un débit de téléchargement après la réception de chaque paquet est réalisée entre la fin de réception du premier paquet dans le fichier de test et la fin de réception du dernier paquet reçu.

Alternativement, la mesure d'un débit de téléchargement après la réception de chaque paquet est réalisée sur un nombre prédéterminé de derniers paquets reçus.

Selon une caractéristique préférée, le critère de stabilité est vérifié lorsque la différence entre les mesures de débit à la réception de deux paquets consécutifs, sur un intervalle prédéterminé de paquets, est inférieure à un seuil prédéterminé.

Ce critère est simple à mettre en oeuvre et à surveiller.

L'invention concerne aussi un terminal client selon la revendication 7 qui comporte des moyens de mise en oeuvre du procédé exposé ci-dessus.

Le terminal client présente des avantages analogues à ceux précédemment exposés.

L'invention concerne encore un programme d'ordinateur selon la revendication 8 comportant des instructions de mise en oeuvre des procédés précédemment présentés.

D'autres caractéristiques et avantages apparaîtront à la lecture de modes de réalisation préférés décrits en référence aux figures dans lesquelles :
- la figure 1 représente un mode de réalisation de dispositif selon l'invention,
- la figure 2 représente un premier mode de réalisation de dispositif selon l'invention,
- la figure 3 représente un mode de réalisation de procédé de mesure de débit selon l'invention,
- la figure 4 représente un second mode de réalisation de dispositif selon l'invention,
- la figure 5 illustre la mesure de débit.

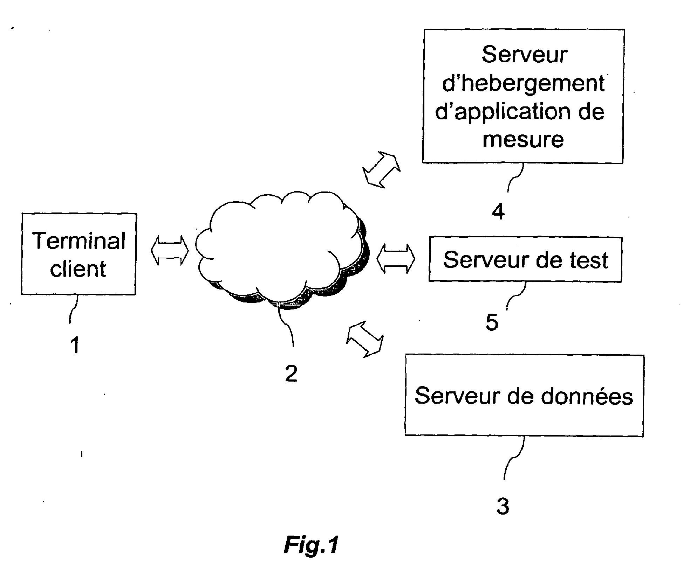

Selon un mode de réalisation de l'invention représenté à la **figure 1**, le dispositif comporte un terminal client 1 connecté à un réseau ce communication 2. Un serveur de données 3 est également relié au réseau de communication 2. Le serveur de données 3 est par exemple adapté à fournir un ensemble de données selon une gamme de différents débits prédéterminés, selon un technique de transmission en continu, dite "streaming".

L'ensemble de données est fourni au terminal client 1 à un débit qui doit être adapté notamment au débit maximal que peut recevoir le terminal 1.

Selon l'invention, un serveur 4 d'hébergement d'application de mesure de débit et un serveur de test 5 sont reliés au réseau de communication 2.

Le dispositif de mesure du débit disponible en réception pour le terminal client 1 connecté au serveur de données par l'intermédiaire d'un réseau de communication, comporte :
- des moyens de connexion du terminal client 1 au serveur 4 d'hébergement d'application de mesure de débit, données selon une gamme de différents débits prédéterminés, selon un technique de transmission en continu, dite "streaming".

L'ensemble de données est fourni au terminal client 1 à un débit qui doit être adapté notamment au débit maximal que peut recevoir le terminal 1.

Selon l'invention, un serveur 4 d'hébergement d'application de mesure de débit et un serveur de test 5 sont reliés au réseau de communication 2.

Le dispositif de mesure du débit disponible en réception pour le terminal client 1 adapté à être connecté au serveur de données par l'intermédiaire d'un réseau de communication, comporte :
- des moyens de connexion du terminal client 1 au serveur 4 d'hébergement d'application de mesure de débit,
- des moyens de téléchargement sur le terminal client d'une application de mesure de débit, à partir du serveur d'hébergement d'application de mesure de débit,
- des moyens de déclenchement de l'application de mesure de débit, cette application comportant les étapes de :

- connexion du terminal client 1 au serveur de test 5,
- téléchargement sur le terminal client d'un fichier de test à partir du serveur de test,
- mesure d'un débit de téléchargement du fichier de test.

Le fonctionnement des serveurs 4 et 5 est exposé dans la suite. Il est à noter que les serveurs 4 et 5 peuvent être physiquement réunis dans un unique serveur. En outre, les serveurs 4 et 5 peuvent être réunis avec le serveur de données 3.

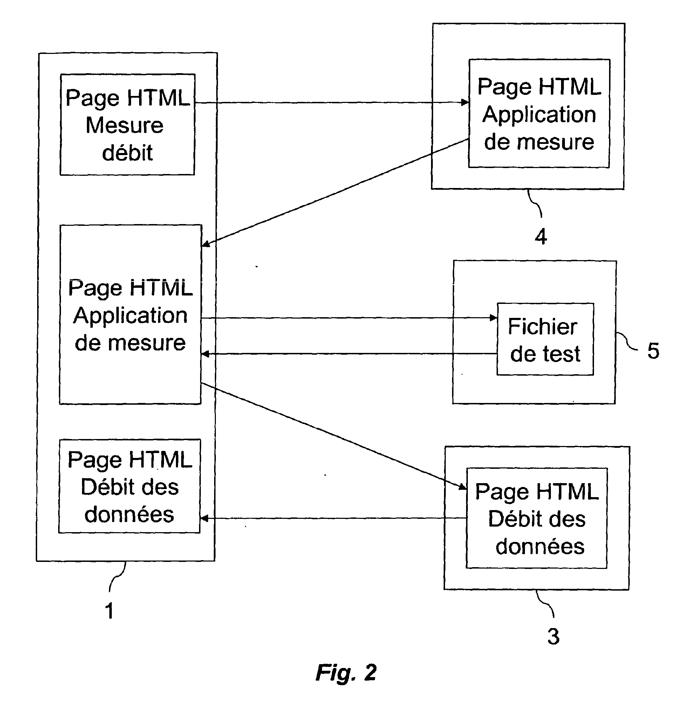

La **figure 2** représente les interactions des éléments de la figure 1, selon un premier mode de réalisation de l'invention.

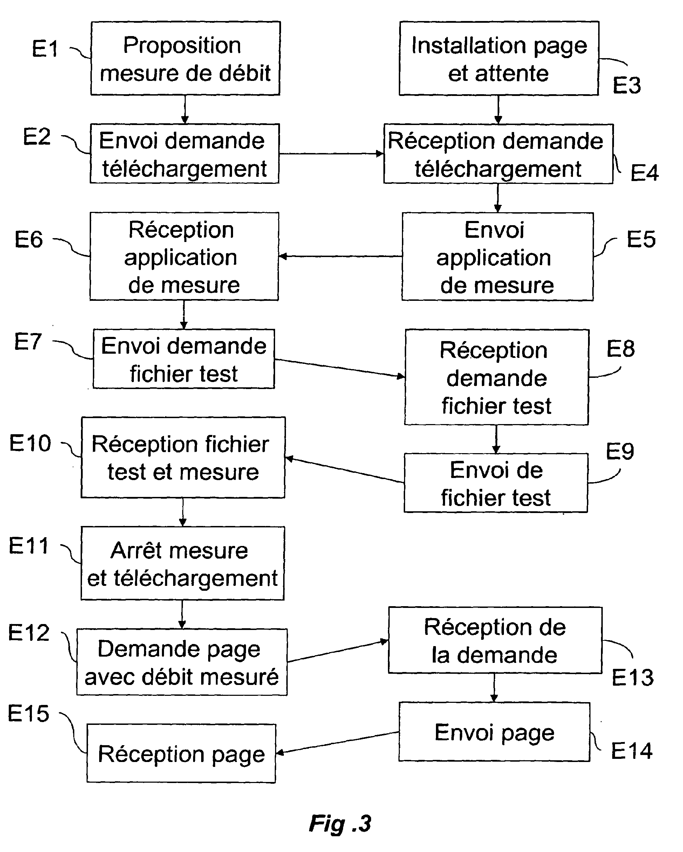

La **figure 3** représente un procédé correspondant de mesure de débit sous la forme d'un algorithme comportant des étapes E1 à E15.

L'étape E1 est l'affichage d'une page HTML sur le terminal client. Cette page propose d'effectuer une mesure de débit effectif en réception pour le terminal client 1. On suppose que l'utilisateur demande la mesure de débit.

L'étape suivante E2 est l'envoi d'une demande de téléchargement d'une application de mesure de débit, depuis le terminal client 1 vers le serveur 4 d'hébergement de cette application. Cette application est disponible sous la forme d'une page HTML.

L'étape E3 est l'installation de la page HTML contenant l'application de mesure de débit dans le serveur dédié 4. Cette étape comporte en outre l'attente de la réception d'une demande de téléchargement de l'application de mesure de débit.

L'étape suivante E4 est la réception, par le serveur 4, de la demande de téléchargement de l'application de mesure de débit venant du terminal 1.

L'étape suivante E5 est l'envoi de la page HTML contenant l'application de mesure de débit, depuis le serveur 4 vers le terminal client 1.

L'étape E6 est la réception de cette page par le terminal client 1.

L'étape suivante E7 est l'envoi d'une demande de fichier test, depuis le terminal client vers le serveur de test 5.

L'étape E8 est la réception de la demande de fichier test par le serveur de test 5, qui était dans un état d'attente.

L'étape suivante E9 est l'envoi du fichier test depuis le serveur 5 vers le terminal client 1. Le fichier test comporte des données qui sont transmises sous la forme de paquets de données. Par exemple, la transmission est réalisée sous la forme de 50 paquets de 4000 octets chacun.

L'étape E10 est la réception progressive du fichier test par le terminal client et la mesure simultanée du débit disponible en réception.

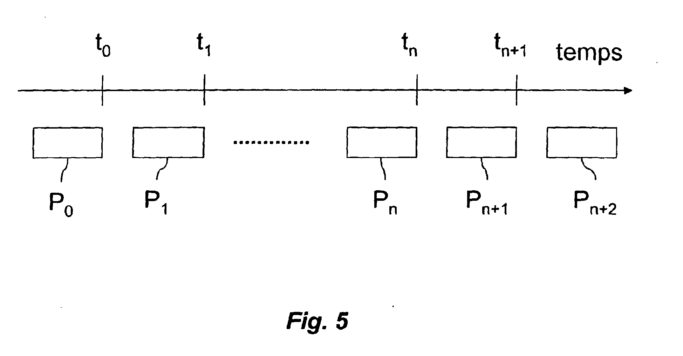

La mesure est effectuée de la manière suivante, illustrée à la **figure 5.** On considère les instants de fin de réception des paquets. La fin de réception du premier paquet P₀ est une initialisation du compte d'octets reçus et une initialisation t₀ des instants de réception. Cela signifie que le contenu du premier paquet n'est pas pris en compte.

Ensuite, à la fin de la réception de chaque paquet Pₙ, on cumule le nombre d'octets reçus depuis l'instant initial t₀. Le débit est le rapport de ce cumul avec la différence du temps courant tₙ avec le temps initial t₀.

En variante, le calcul de débit est effectué sur un nombre prédéterminé de derniers paquets reçus.

La réception des paquets du fichier test et la mesure de débit sont effectuées tant que le résultat de la mesure n'est pas stabilisé. Le critère de stabilité est vérifié lorsque la valeur absolue de la différence entre les mesures de débit à la réception de deux paquets consécutifs, sur un intervalle prédéterminé de paquets, est inférieure à un seuil prédéterminé. Le seuil est par exemple égal à 2 %.

Lorsque le critère de stabilité est vérifié, la mesure de débit est terminée. La dernière valeur mesurée est le débit disponible en réception pour le terminal client 1.

L'étape E10 est alors suivie de l'étape E11, qui est la fin des mesures et l'arrêt du téléchargement du fichier test.

A l'étape suivante E12, le terminal client 1 demande au serveur de données 3 une page PHP avec en paramètre le débit mesuré.

Selon un mode de réalisation particulier, la demande de page PHP est faite à un serveur intermédiaire.

En variante, ce n'est pas le débit mesuré qui est intégré dans la demande, mais une valeur de palier de débit compatible avec le débit mesuré. Dans ce cas, les valeurs de débit possibles ont été préalablement téléchargées, par exemple avec l'application de mesure de débit.

Le serveur de données 3 comporte un ensemble de données, par exemple un contenu audiovisuel, disponible selon différents débits, sous la forme de plusieurs fichiers correspondant chacun à un débit.

A l'étape E13, le serveur 3, ou le serveur intermédiaire, reçoit la demande de page PHP, accompagnée du débit disponible en réception pour le terminal client, ou de la valeur de palier de débit. Le serveur 3, ou le serveur intermédiaire, crée une page HTML indiquant un débit préférentiel d'envoi de données. Le débit préférentiel dépend du débit mesuré.

L'étape suivante E14 est l'envoi de la page HTML créée à l'étape précédente depuis le serveur de données 3 ou le serveur intermédiaire vers le terminal client 1.

Par exemple, si le débit mesuré est compris entre 0 et 48 kbit/s, le serveur envoie une page HTML indiquant que les données demandées ne peuvent pas être envoyées avec ce débit.

Si le débit mesuré est compris entre 48 et 120 kbit/s, le serveur envoie une page HTML indiquant que le débit le plus adapté pour l'envoi des données demandées est un débit de 40 kbit/s.

Si le débit mesuré est compris entre 120 et 360 kbit/s, le serveur envoie une page HTML indiquant que le débit le plus adapté pour l'envoi des données demandées est un débit de 100 kbit/s.

Si le débit mesuré est compris entre 360 et 840 kbit/s, le serveur envoie une page HTML indiquant que le débit le plus adapté pour l'envoi des données demandées est un débit de 300 kbit/s.

Si le débit mesuré est supérieur à 840 kbit/s, le serveur envoie une page HTML indiquant que le débit le plus adapté pour l'envoi des données demandées est un débit de 700 kbit/s.

A l'étape E15, le terminal client 1 reçoit et affiche la page HTML envoyée par le serveur de données 3 ou le serveur intermédiaire.

Le terminal client peut ensuite demander au serveur de données 3 le téléchargement de l'ensemble de données. Pour cela, l'utilisateur a à sa disposition le débit le plus adapté.

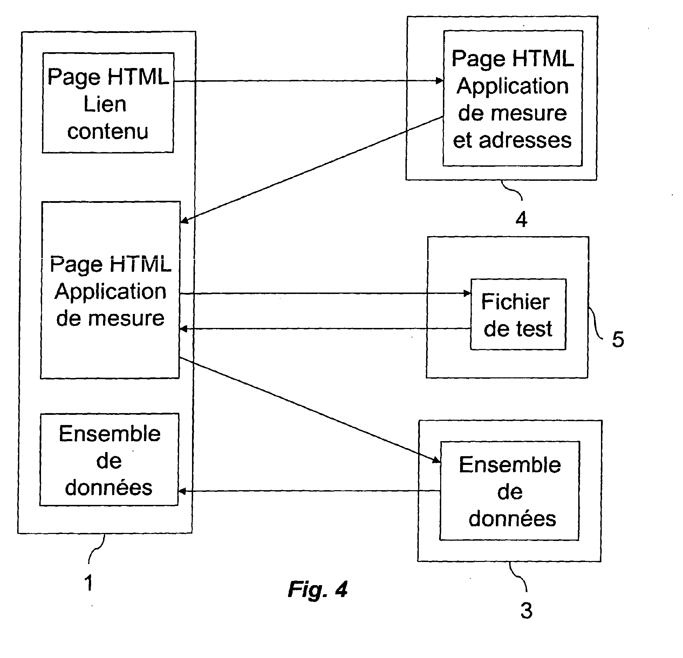

Un second mode de réalisation est représenté à la **figure 4.** Dans ce mode de réalisation, la demande de mesure de débit est faite simultanément avec une demande de téléchargement d'un ensemble de données. La demande de mesure de débit peut même être effectuée de manière transparente pour l'utilisateur.

Le fonctionnement de ce mode de réalisation est analogue à celui du précédent, à l'exception des différences suivantes.

Lorsque l'application de mesure de débit est téléchargée sur le terminal client, elle est accompagnée d'un ensemble d'adresses. Chacune des adresses correspond à l'ensemble de données à un débit particulier.

Lorsque le débit disponible a été mesuré, le terminal client demande directement l'ensemble de données au débit disponible, par l'intermédiaire de son adresse.

Bien entendu, des variantes de réalisation sont possibles. En particulier, lorsque le débit disponible a été mesuré, il est possible de proposer à l'utilisateur du terminal client plusieurs valeurs de débit de téléchargement, déterminées en fonction du débit mesuré et compatibles avec celui-ci. L'utilisateur sélectionne alors une valeur de débit, qui remplace ensuite la valeur de débit mesuré. En particulier, c'est la valeur sélectionnée qui est prise en compte pour le téléchargement de l'ensemble de données.

## Revendications

1. Procédé de téléchargement de données numériques sur un terminal client (1) adapté à être connecté à un serveur de données (3) par l'intermédiaire d'un réseau de communication (2), comportant les étapes de:
- connexion (E2) du terminal client (1) à un serveur d'hébergement (4) d'application de mesure de débit disponible en réception,
- téléchargement (E6) sur le terminal client (1) de ladite application de mesure de débit, à partir du serveur d'hébergement (4) d'application de mesure de débit,
**caractérisé en ce qu'**il comporte les étapes supplémentaires de:
- déclenchement (E7) de l'application de mesure de débit, cette application mettant en oeuvre une étape de connexion du terminal client (1) à un serveur de test (5), une étape de téléchargement (E10) sur le terminal client (1) d'un fichier de test à partir du serveur de test (5), et une étape de mesure (E10) d'un débit de téléchargement du fichier de test,
- et connexion du terminal client (1) au serveur de données (3) avec une adresse déterminée en fonction du débit disponible mesuré.

2. Procédé de téléchargement de données numériques selon la revendication 1, **caractérisé en ce que** le fichier de test comporte des paquets de données, et **en ce que** l'étape (E10) de mesure d'un débit de téléchargement du fichier de test comporte
- la mesure d'un débit de téléchargement après la réception de chaque paquet,
- la vérification d'un test de stabilité des débits mesuré,
- l'arrêt du téléchargement du fichier de test et des mesures lorsque le test de stabilité est vérifié.

3. Procédé de téléchargement de données numériques selon la revendication 2, **caractérisé en ce que** la mesure d'un débit de téléchargement après la réception de chaque paquet est réalisée entre un paquet d'ordre prédéterminé dans le fichier de test et le dernier paquet reçu.

4. Procédé de téléchargement de données numériques selon la revendication 2, **caractérisé en ce que** la mesure d'un débit de téléchargement après la réception de chaque paquet est réalisée entre la fin de réception du premier paquet dans le fichier de test et la fin de réception du dernier paquet reçu.

5. Procédé de téléchargement de données numériques selon la revendication 2, **caractérisé en ce que** la mesure d'un débit de téléchargement après la réception de chaque paquet est réalisée sur un nombre prédéterminé de derniers paquets reçus.

6. Procédé de téléchargement de données numériques selon l'une quelconque des revendications 2 à 5, **caractérisé en ce que** le critère de stabilité est vérifié lorsque la différence entre les mesures de débit à la réception de deux paquets consécutifs, sur un intervalle prédéterminé de paquets, est inférieure à un seuil prédéterminé.

7. Terminal client (1) adapté à être connecté à un serveur de données (3) par l'intermédiaire d'un réseau de communication (2), comportant :
- des moyens de connexion du terminal client (1) à un serveur d'hébergement (4) d'application de mesure de débit,
- des moyens de téléchargement sur le terminal client (1) d'une application de mesure de débit, à partir du serveur d'hébergement (4) d'application de mesure de débit,
**caractérisé en ce qu'**il comporte en outre
- des moyens de déclenchement de l'application de mesure de débit, cette application étant adaptée pour :
- connecter le terminal client (1) à un serveur de test (5),
- télécharger sur le terminal client (1) un fichier de test à partir du serveur de test (5),
- mesurer un débit de téléchargement du fichier de test,
- et des moyens de connexion du terminal client (1) à un serveur de données (3) avec une adresse déterminée en fonction d'un débit disponible mesuré par ladite application de mesure de débit.

8. Programme d'ordinateur stocké sur un support d'informations, comportant des instructions pour mettre en oeuvre toutes les étapes du procédé selon l'une quelconque des revendications 1 à 6, quand il est exécuté sur un ordinateur.

## Claims

1. Method for downloading digital data onto a client terminal (1) suitable for being connected to a data server (3) by way of a communication network (2), comprising the steps of:
- connecting (E2) the client terminal (1) to a server (4) hosting an application for measuring data rate available at reception,
- downloading (E6) onto the client terminal (1) the said data rate measurement application, from the server (4) hosting the data rate measurement application,
**characterized in that** it comprises the additional steps of:
- triggering (E7) the data rate measurement application, this application implementing a step of connecting the client terminal (1) to a test server (5), a step (E10) of downloading a test file onto the client terminal (1) from the test server (5), and a step (E10) of measuring a download data rate for the test file,
- connecting the client terminal (1) to the data server (3) with an address determined as a function of the measured available data rate.

2. Method for downloading digital data according to Claim 1, **characterized in that** the test file comprises data packets, and **in that** the step (E10) of measuring a download data rate for the test file comprises
- measuring a download data rate after receiving each packet,
- checking satisfaction of a stability test for the data rates measured,
- stopping the downloading of the test file and measurements when the stability test is satisfied.

3. Method for downloading digital data according to Claim 2, **characterized in that** the measurement of a download data rate after receiving each packet is carried out between a packet of predetermined order in the test file and the last packet received.

4. Method for downloading digital data according to Claim 2, **characterized in that** the measurement of a download data rate after receiving each packet is carried out between the end of reception of the first packet in the test file and the end of reception of the last packet received.

5. Method for downloading digital data according to Claim 2, **characterized in that** the measurement of a download data rate after receiving each packet is carried out on a predetermined number of last packets received.

6. Method for downloading digital data according to any one of Claims 2 to 5, **characterized in that** the stability criterion is satisfied when the difference between the data rate measurements on receiving two consecutive packets, over a predetermined interval of packets, is less than a predetermined threshold.

7. Client terminal (1) suitable for being connected to a data server (3) by way of a communication network (2), comprising:
- means for connecting the client terminal (1) to a server (4) hosting the data rate measurement application,
- means for downloading a data rate measurement application onto the client terminal (1), from the server (4) hosting the data rate measurement application,
**characterized in that** it furthermore comprises
- means for triggering the data rate measurement application, this application being suitable for:
- connecting the client terminal (1) to a test server (5),
- downloading a test file onto the client terminal (1) from the test server (5),
- measuring a download data rate for the test file,
- and means for connecting the client terminal (1) to a data server (3) with an address determined as a function of an available data rate measured by the said data rate measurement application.

8. Computer program stored on an information medium, comprising instructions for implementing all the steps of the method according to any one of Claims 1 to 6, when it is executed on a computer.

## Patentansprüche

1. Verfahren zum Herunterladen digitaler Daten auf ein Client-Endgerät (1), das geeignet ist, mit einem Datenserver (3) über ein Kommunikationsnetz (2) verbunden zu werden, folgende Schritte aufweisend:
- Verbindung (E2) des Client-Endgeräts (1) mit einem Hauptserver (4) zur Anwendung der Messung der beim Empfang verfügbaren Übertragungsrate,
- Herunterladen (E6) der Anwendung zur Messung der Übertragungsrate von dem Hauptserver (4) zur Anwendung der Messung der Übertragungsrate auf das Client-Endgerät (1),
**dadurch gekennzeichnet, dass** es die folgenden zusätzlichen Schritte aufweist:
- Auslösung (E7) der Anwendung der Messung der Übertragungsrate, wobei diese Anwendung einen Schritt der Verbindung des Client-Endgeräts (1) mit einem Testserver (5), einen Schritt des Herunterladens (E10) einer Testdatei von einem Testserver (5) auf das Client-Endgerät (1) und einen Schritt der Messung (E10) einer Übertragungsrate beim Herunterladen der Testdatei verwendet,
- und Verbindung des Client-Endgeräts (1) mit dem Datenserver (3) mit einer Adresse, die in Abhängigkeit von der gemessenen verfügbaren Übertragungsrate bestimmt wird.

2. Verfahren zum Herunterladen digitaler Daten nach Anspruch 1, **dadurch gekennzeichnet, dass** die Testdatei Datenpakete aufweist, und dass der Schritt (E10) der Messung einer Übertragungsrate beim Herunterladen der Testdatei Folgendes aufweist:
- die Messung einer Übertragungsrate beim Herunterladen nach dem Empfang jedes Pakets,
- die Überprüfung eines Stabilitätstests der gemessenen Übertragungsraten,
- die Unterbrechung des Herunterladens der Testdatei und der Messungen, wenn der Stabilitätstest überprüft wird.

3. Verfahren zum Herunterladen digitaler Daten nach Anspruch 2, **dadurch gekennzeichnet, dass** die Messung einer Übertragungsrate beim Herunterladen nach dem Empfang jedes Pakets zwischen einem Paket mit einer in der Testdatei vorgegebenen Reihenfolge und dem zuletzt empfangenen Paket erfolgt.

4. Verfahren zum Herunterladen digitaler Daten nach Anspruch 2, **dadurch gekennzeichnet, dass** die Messung einer Übertragungsrate beim Herunterladen nach dem Empfang jedes Pakets zwischen dem Ende des Empfangs des ersten Pakets in der Testdatei und dem Ende des Empfangs des zuletzt empfangenen Pakets erfolgt.

5. Verfahren zum Herunterladen digitaler Daten nach Anspruch 2, **dadurch gekennzeichnet, dass** die Messung einer Übertragungsrate beim Herunterladen nach dem Empfang jedes Pakets bei einer vorgegebenen Anzahl von zuletzt empfangenen Paketen erfolgt.

6. Verfahren zum Herunterladen digitaler Daten nach einem der Ansprüche 2 bis 5, **dadurch gekennzeichnet, dass** das Stabilitätskriterium überprüft wird, wenn der Unterschied zwischen den Messungen der Übertragungsrate beim Empfang von zwei aufeinanderfolgenden Paketen in einem vorgegebenen zeitlichen Abstand der Pakete unter einem vorgegebenen Grenzwert liegt.

7. Client-Endgerät (1), das geeignet ist, über ein Kommunikationsnetz (2) mit einem Datenserver (3) verbunden zu werden, aufweisend:
- Mittel zur Verbindung des Client-Endgeräts (1) mit einem Hauptserver (4) zur Anwendung der Messung der Übertragungsrate,
- Mittel zum Herunterladen einer Anwendung zur Messung der Übertragungsrate von dem Hauptserver (4) zur Anwendung der Messung der Übertragungsrate auf das Client-Endgerät (1),
**dadurch gekennzeichnet, dass** es des Weiteren Folgendes aufweist:
- Mittel zur Auslösung der Anwendung der Messung der Übertragungsrate, wobei diese Anwendung geeignet ist, um:
- das Client-Endgerät (1) mit einem Testserver (5) zu verbinden,
- eine Testdatei von dem Testserver (5) auf das Client-Endgerät (1) herunterzuladen,
- die Übertragungsrate beim Herunterladen der Testdatei zu messen,
- und Mittel zur Verbindung des Client-Endgeräts (1) mit einem Datenserver (3) mit einer Adresse, die in Abhängigkeit von der verfügbaren Übertragungsrate, die durch die Anwendung der Messung der Übertragungsrate gemessen wurde, bestimmt wird.

8. Rechnerprogramm, das auf einem Informationsträger gespeichert ist, das Anweisungen aufweist, um sämtliche Schritte des Verfahrens nach einem der Ansprüche 1 bis 6 durchzuführen, wenn es auf einem Rechner ausgeführt wird.
